Europäisches Patentamt

European Patent Office

Office européen des brevets

(19)

(11) Publication number: **0 168 544**
A1

# (12) EUROPEAN PATENT APPLICATION

(21) Application number: **84830217.0**

(22) Date of filing: **17.07.84**

(51) Int. Cl.⁴: **F 16 B 7/04,** F 16 B 12/32

(43) Date of publication of application: **22.01.86**
**Bulletin 86/4**

(84) Designated Contracting States: **AT BE CH DE FR GB IT
LI**

(71) Applicant: **Piotti, Riccardo, Viale Stelvio, 27/4,
I-20100 Milan (IT)**

(72) Inventor: **Piotti, Riccardo, Viale Stelvio, 27/4,
I-20100 Milan (IT)**

(74) Representative: **Dr. Ing. A. Racheli & C., Viale San
Michele del Carso, 4, I-20144 Milano (IT)**

(54) A corner joint for connecting bar elements.

(57) A corner joint (1P) for connecting bar elements (A) comprises two or preferably three housings or slots (14, 15, 16) having skew axes and generally at right angles to one another; all of the housings communicate with a blocking hole (20) having an oblique axis; a wedge, inserted in the blocking hole, blocks in position the bar elements inserted in the housings.

ACTORUM AG

Applicant:

RICCARDO PLOTTI

IT – 20100 MILAN

Viale Stelvio 27/4

"A CORNER JOINT FOR CONNECTING BAR ELEMENTS"

This patent application relates to the field of connecting or jointing devices for angle interconnection of bar elements, such as tubular elements in scaffolding, or supporting bars for shelving and so on, in the field of furnishings, storage, shop window dressing and the like.

In order to interconnect two or more bar elements at an angle to each other use is made at present of sleeve-like connectors, spiders and so on, either of a threaded type or not. The bar elements are blocked in the connectors either by screwing therein, or by clamping thereof between two half-sleeves and blocking the same to each other.

A disadvantage in this technique consists in the complexity of the

- 2 -

junctions requiring several pieces or members and extended periods of time to interconnect the various bars.

At present, in carrying out any work, the aim is to do it as rapidly as possible and with precision and sturdiness. Moreover, the maximum effort is made in order that constructions are simplified, thus making the same faster and less liable to errors. Thus, there is in this field the requirement for a corner joint or connecting device which is easy and ready to use.

Therefore, and for the above specified reasons, a joint as herein explained has been developed, which joint substantially comprises two or preferably three holes or housings to receive the bars. The holes are arranged with their axes skew to one another, that is not coplanar, and preferably at right angles to one another, that is, so oriented as to have on a plane perpendicular to one of said axes the projections of the others at right angles to one another.

The distance between the axes of two housings is equal to or slightly larger than the sum of the radiuses of such housings. Finally, a housing or hole for a blocking means is placed transversely to the above mentioned housings and therefore is in communication with the other housings to enable a wedge-shape blocking member inserted therein to block under pressure the corner forming bars, since any suitable inserted screw would keep it under loaded conditions against the bars.

Preferably, but not necessarily, the housings will be of circular shape and may have either similar or dissimilar diameters from one another.

As seen from the outside, such a device may be of any desired shape, but will preferably be of a cube shape, with the axis of each housing orthogonal to a pair of parallel sides of the cube. The cube will have two chamfered opposite apexes, forming oblique surfaces, to which the axis of the blocking hole is orthogonal.

By inserting the preselected bars or tubes in the three orthogonal holes and arranging the same at the desired position thereof, the whole assembly can be blocked in a single operation by inserting the blocking member, which can be a conical pin or an expansion plug, into the inclined hole. Thus, it will suffice to force the pin or act on the fastening screw of the blocking member to block at the same time the three orthogonal rods in the device. The device could also be used with only two bars. With the aid of further devices, planes or solids can be provided for use in the most varied constructions.

The novel device has the advantage of being easily and readily assembled and disassembled. It can be used for scaffolding, furnishings, in the field of the so-called art of "do it yourself", shop window dressing and exhibitions of various type.

An example of the invention, in one of its most useful forms, will now be illustrated purely as an attempt to explain one of the many possible applications of the blocking concept.

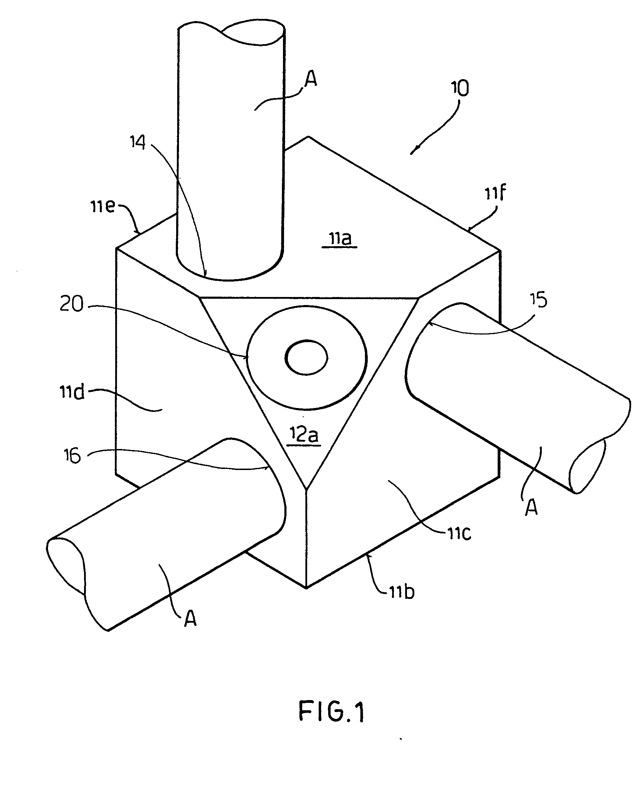

Fig. 1 is a perspective view of the device with rod or bar elements arranged within the housings;

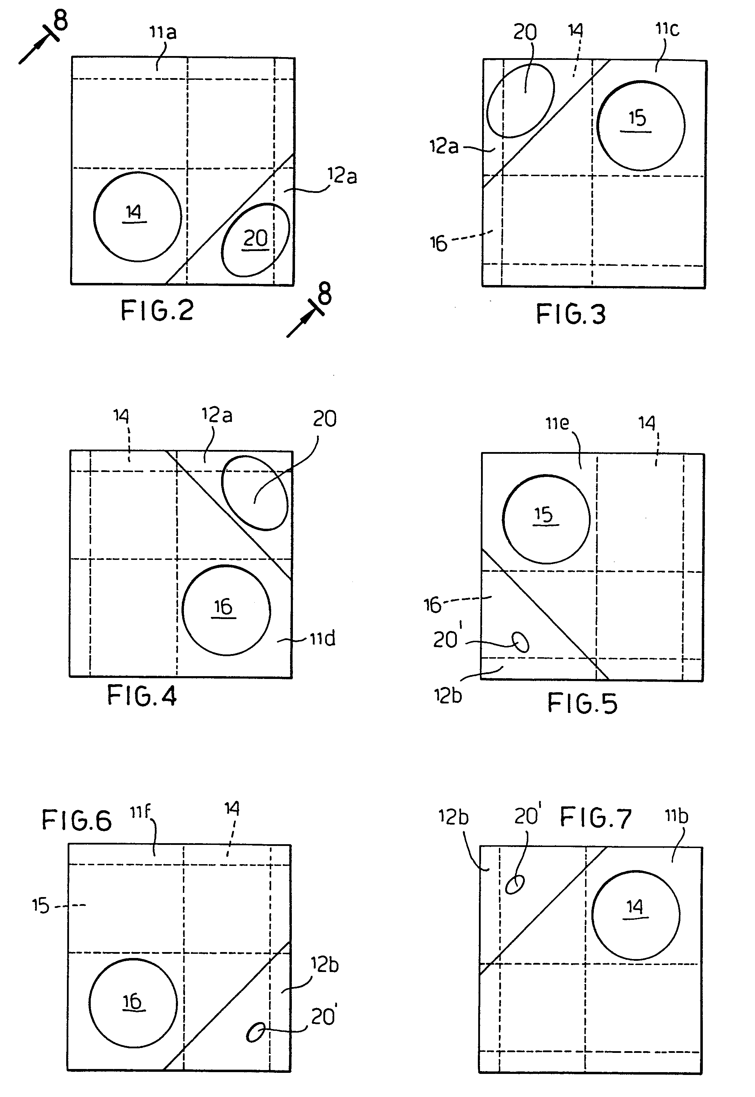

Fig. 2 is a top view of the device shown in Fig. 1;

Figs. 3, 4, 5 and 6 are views of the four sides of the device; the housings not shown are drawn by dash lines;

Fig. 7 is a view showing the lower side of Fig. 1;

Fig. 8 is a sectional view taken along line 8-8 of Fig. 2, and also showing a disassembled blocking member;

Fig. 9 is a side view of a blocking member;

Fig. 10 is a side view of the blocking member of Fig. 9, but at 180° relative to said figure;

Fig. 11 is a top view with respect to Fig. 9; and

Fig. 12 is a bottom view.

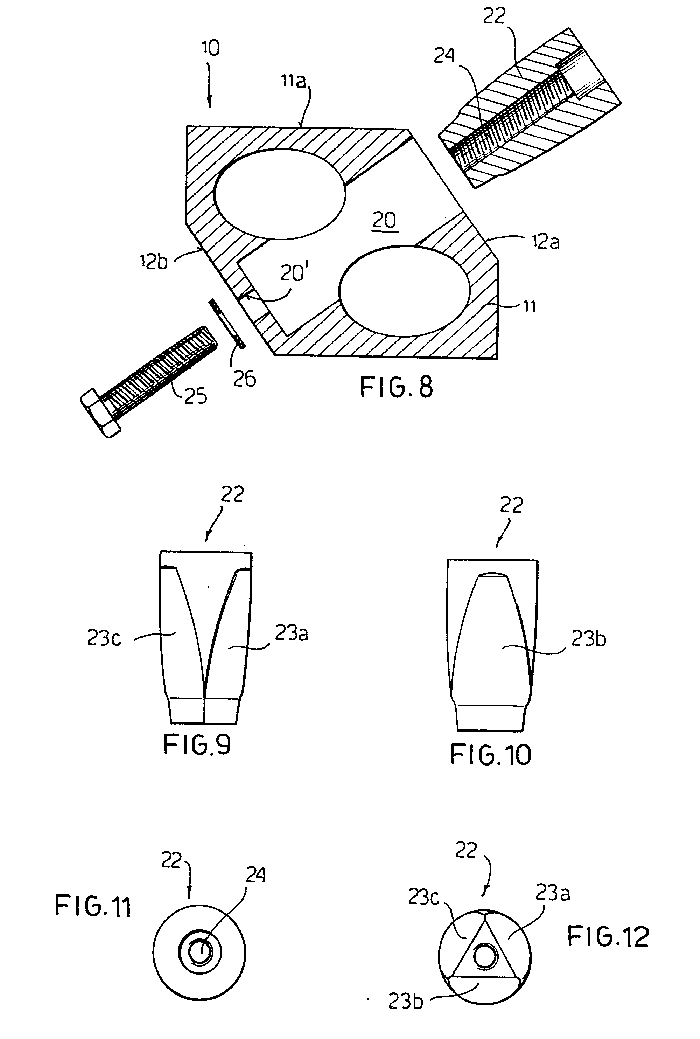

In the example shown, (Ref. Fig. 8) the novel device 10 comprises body 11, which has been shown and will be described as being of cube shape.

However, this is by no means a limiting case, since the body may be of any outer shape desired, for example, also of a sphere shape.

Therefore, said body 11 shown comprises six sides or planes designated at 11a, 11b, 11c, 11d, 11e and 11f, which are orthogonal to one another. Two opposite corners are chamfered to form further sides or planes 12a and 12b, generally parallel to each other and orthogonal to a diagonal of the cube.

A first housing or through hole 14 extends between the upper side 11a and the lower side 11b and has an axis which is vertical in However, a different arrangement could be possible for the holes or housings; for example, a specular or mirror like arrangement relative to that shown, that is to say that "right" and "left" devices can be provided, the right devices being the same as the left devices when seen in a mirror.

A blocking hole or housing 2 extends between side 12a and side 12b and has its axis oblique or skew with respect to the axes of the above mentioned holes or housings. Particularly, since each of the axes 14', 15' and 16' of the above mentioned holes or housings are directed parallel to an edge of the cube, the axis of the blocking hole will preferably but not necessarily run from an apex or corner of the cube adjacent the quadrant of the sides not occupied by the holes to the opposite apex or corner, which is also adjacent the quadrants not occupied by the holes for the bars.

In other words, each one of the three axes of the holes are preferably arranged parallel to an axis X or Y or Z of a triad of Cartesian axes in the space. In this case, preferably (but not necessarily) the hole or housing 20 would have the same inclination with respect to the three axes. The hole or housing 20 intersects all of said three holes 14, 15 and 16, that is to say the distance or spacing between the axis of each hole 14, 15 and 16 and the axis of hole 20 is less than the sum of the respective radiuses. Said hole or housing 20 preferably has an end portion 20' of smaller diameter than the remaining part or portion.

A blocking device 22 (Figs. 9-12) is of substantialy wedge shape or anyhow a chamfered or tapered shape and preferably has three inclined sides (or anyhow an equal number of sides as the number of rods to be blocked) and designated as 23a, 23b and 23c, respectively.

It also has a threaded axial hole 24 at the tapered end for blocking by means of screw 25 and eventually, a washer 26.

Preferably, the device can be made of plastics, such as nylon, or metals.

One use of the device will be hereinafter shown.

One, two or three bars A are inserted respectively in the holes or housings 14, 15 and 16, adjusted in position and manually retained therein, while the wedge shape blocking member 22 is inserted in hole or housing 20. This blocking member is inserted, for example, by hammering and/or blocked by screw 25 and therefore blocks the bars within the housings. It should be noted that blocking or clamping occurs by friction and that each bar presses against the opposite side of its housing as forced by the wedge. Therefore, by providing the housings with accuracy, it is possible to obtain an accurate arrangement of the rods or bars both as to solidity and angulation.

RICCARDO PLO1.1

IT- 20100 MILAN


C L A I M S


1.       A corner joint for connection of bar elements, characterized by  comprising a body (11) having housings (14, 15, 16) for said bar elements, such housings having their axes which are skew to one another and independent of one another, and a further housing (20) for a blocking device (22), said further housing having an axis which is skew with respect to the housings for the bars to be blocked and intersects the same.

2.       A joint as claimed in Claim 1, characterized in that the bar housings (14, 15, 16) have their axes at right angles to one another and the wedge housing (20) has its axis which is oblique relative to said first mentioned axes.

3.       A joint as claimed in Claim 1, characterized in that said body (11) is of cube shape; each of the so-called housings (14, 15, 16) has its axis parallel to an edge of the cube and extends from one side or plane of the cube to the opposite side, and the so-called housing (20) for the blocking device extends along a diagonal of the cube.

4.       A joint as claimed in Claim 3, characterized in that each housing opens in a quadrant or fourth part of the

respective side (11a, b, c, d, e or f) of the cube.

5. A joint as claimed in claim 3, characterized in that said cube has a levelled off surface (12a, b) at each end of said diagonal on the farthermost corners from the through holes.

6. A joint as claimed in Claim 1, characterized by further comprising a tapered wedge blocking device (22).

7. A joint as claimed in Claim 6, characterized in that said blocking device has at the tapered portion as many sides (23a, b, c) as the bars to be blocked together.

8. A joint as claimed in Claim 6, characterized in that said housing for the blocking device has a perforated end wall allowing the passage of a screw acting by pulling the blocking device to press against the bars to be clamped.

FIG.1

FIG.2

FIG.3

FIG.4

FIG.5

FIG.6

FIG.7

FIG. 8

FIG.9

FIG.10

FIG.11

FIG.12

European Patent
Office

**EUROPEAN SEARCH REPORT**

0168544
Application number

EP 84 83 0217

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-4 066 371 (CHAPMAN)<br>* Whole document * | 1-8 | F 16 B 7/04<br>F 16 B 12/32 |
| A | GB-A-1 556 418 (SAI KHEONG KWAN)<br>* Figures 1,2,4 * | 5 | |

TECHNICAL FIELDS
SEARCHED (Int. Cl.4)

F 16 B

The present search report has been drawn up for all claims

| Place of search | Date of completion of the search | Examiner |
|---|---|---|
| THE HAGUE | 10-04-1985 | VAN DER WAL W |